# EUROPEAN PATENT SPECIFICATION

(11) **EP 1 576 052 B1**
(45) Date of publication and mention of the grant of the patent: **14.02.2007**
(21) Application number: 03719258.0
(22) Date of filing: 07.05.2003
(51) Int. Cl.: C08L 67/00, C08L 33/12, G02B 1/04

(54) **LIGHT DIFFUSION RESIN COMPOSITION**
LICHTDIFFUNDIERENDE HARZZUSAMMENSETZUNG
COMPOSITION DE RESINE A DIFFUSION DE LA LUMIERE

(30) Priority: 27.12.2002 KR 2002084729; 14.02.2003 KR 2003009335
(43) Date of publication of application: 21.09.2005
(73) Proprietor: KOLON INDUSTRIES, INC., Kyunggi-do, 427-709 Kwachen-city (KR)
(72) Inventor: KANG, Chung-Seock, Kyunggi-do, Yongin-city 449-907 (KR); KIM, Dae-Jin, Kyunggi-do, Yongin-city 449-900 (KR); KIM, Young-Bum, Seoul 135-080 (KR)
(74) Representative: Merkle, Gebhard
(86) International application number: PCT/KR2003/000902
(87) International publication number: WO 2004/058889

(56) References cited:
- US-A- 4 310 584
- US-A- 4 367 170
- US-A- 5 229 208
- US-A1- 2002 141 194

## Description

The present invention relates to a light diffusion resin composition. More particularly, the present invention relates to a light diffusion resin composition that can be readily molded into a cover for lightings or sign boards by a processing method such as injection molding, extrusion molding, or compression molding and, when applied to a cover for lightings or sign boards, provide a high haze and a high light transmittance to make inside contents invisible with a considerably high brightness, and a low surface resistance, hardly causing static electricity and thereby avoiding dust-attraction.

In general, the properties necessary for elementary materials of a cover for indoor and outdoor lightings or signboards are high haze and high light transmittance.

The haze is one of the important properties that must be taken into consideration in applying a cover for the optical use purpose, since visible inside light or contents may defile the appearance of the lightings with an increasing demand for high-brightness small-sized lightings, and a transparent cover may dazzle the eyes by direct illumination.

With the cover having a low light transmittance, the room becomes darker with a dim light and requires a larger number of lightings or high-brightness lightings for maintaining a desired luminance.

The conventional approaches for providing light diffusion and haze involve molding an acrylic resin in combination with additives such as a light diffuser, a optical brightener, a plasticizer, or the like. The specific examples of the conventional light diffuser include inorganic fillers, such as titanium dioxide, barium sulfate, talc, calcium carbonate, or barium oleate; or organic cross-linked transparent polymer materials.

For example, Korean Patent No. 196370 discloses a preparation method of an acrylic sheet for lightings using an inorganic material as a light diffuser in addition to a polymethylmethacrylate resin. This method enables molding of covers having a complicated profile or a large size with excellency in light diffusion, weather resistance and mechanical properties.

Alternatively, Korean Patent No. 229266 discloses a preparation method of a light diffusion acrylic resin composition using a cross-linked styrene resin and titanium dioxide as a brightener in addition to a polymethylmethacrylate resin. This method provides a resin composition having a high light transmittance and guarantees uniform and good light diffusion relative to the existing compositions.

As can be seen from the above examples, an acrylic resin is primarily used as a matrix resin in the conventional preparation methods of a sheet for lightings. Typically, the light diffusion sheet prepared from an acrylic resin can be applied only to the manufacture of small-sized lightings, because the sheet molding is performed in a batch way with a limited size of a glass board for casting (Korean Patent Laid Open No. 87-4802). The use of recycled monomers makes the product yellowish with a very low weather resistance. Moreover, the sheet thus obtained can be molded into a cover for lightings by a vacuum forming only requiring a considerable amount of heat, so that there is a difficulty in the aspect of the manufacturing process and the formation of sharp corners.

In another preparation method of sheet type covers using a pure polymethylmethacrylate resin instead of the recycled monomers, the product may be excellent in haze but provides unsatisfactory mechanical properties such as impact strength.

On the other hand, the use of inorganic fillers as a light diffuser for providing light diffusion to the acrylic resin results in a striking deterioration of mechanical properties such as light transmittance and impact strength, roughens the surface of the product, and causes abrasion of the screws of finishing machinery after a long-term use, thus reducing the use life of the machinery.

To solve these problems, there is an approach that replaces the inorganic fillers as a light diffuser with cross-linked styrene beads having an average particle diameter of 8 µm, which is an organic cross-linked transparent polymeric material having a high light transmittance. Compared with the sheet composition using inorganic fillers, the sheet composition of this method cannot acquire improved light transmittance and is inapplicable to the cover for lightings that requires a high light transmittance.

The currently encountered problem with the prevention of static electricity is still unsolved. The addition of the inorganic light diffuser weakens the impact strength of the composition, resulting in a cover of a complicated profile or a larger size and making the cover fragile.

The problems with the conventional methods can be summarized as follows: (1) the use of an inorganic filler as a light diffuser added to the polyacryl-based matrix resin may enhance the haze but deteriorates mechanical properties such as light transmittance and impact strength; and (2) the use of a cross-linked styrene bead that is an organic cross-linked transparent polymer material as a light diffuser to improve the above problem, and the use of titanium dioxide to enhance the brightness may lead to unsatisfactory improvement of light transmittance and mechanical properties such as impact strength, still cause a possibility of dust-attraction due to static electricity; and deteriorate the impact strength to restrain the profile of the molded product.

### Disclosure of Invention

In an attempt to develop a novel light diffusion resin composition that solves the problems of low light transmittance, haze and impact strength, with the sheet for lightings as prepared from the conventional composition including a light diffuser added to an acrylic resin, the inventors of the present invention have contrived the present invention on the basis of the fact that a sheet-shaped cover for lightings or sign boards with excellent light transmittance, antistatic characteristic and mechanical properties as well as high haze can be manufactured from a light diffusion resin composition comprising a polyester-based resin as a matrix resin and a bead type light diffusion resin comprised of polymethylmethacrylate (PMMA) as a light diffuser by injection molding or extrusion molding.

It is therefore an object of the present invention to provide a light diffusion resin composition having a high haze and excellent light transmittance and antistatic characteristic and readily processed into a cover for lightings or sign boards by the conventional methods such as injection molding or extrusion molding to provide a high impact strength.

To achieve the object of the present invention, there is provided a light diffusion resin composition that includes a polyester-based resin, a bead type light diffusion resin including PMMA as a light diffuser, an antistatic agent, and an optical brightener.

Now, the present invention will be described in further detail as follows.

The present invention is directed to a light diffusion resin composition comprising a polyester-based resin, a bead type light diffusion resin including PMMA as a light diffuser, an antistatic agent, and a fluorescent brightener.

Unlike the conventional light diffusion resin composition using an acrylic resin as a matrix resin, the present invention uses a polyester-based resin. The specific examples of the polyester-based resin as used herein may include one of the polymers selected from polyethyleneterephthalate (PET), polybutyleneterephthalate (PBT), poly(ethyleneterephthalate-co-dimethylcyclohexylterephthalate) (PETG), or polyethylenenaphthalate (PEN); or copolymers of these polymers.

The most preferred polyester-based resin is PETG, which is a perfect amorphous polyester resin having a considerably high impact strength and no crystallinity as compared with other polyester-based resins. If used in the preparation of the light diffusion resin composition, the PETG attributes to good processibility because of its broad range of the processing temperature compare to the other polyester resins, facilitates a secondary processing such as thermoforming or vacuum forming without efflorescence caused by crystallization, and has advantage for a long-term use without a secular change such as crystallization caused by heat after the processing.

In the light diffusion resin composition of the present invention, the light diffuser used to provide light diffusion is a bead type light diffusion resin comprised of PMMA and containing 50 to 100 mol% of methylmethacrylate and less than 50 mol% of styrene. The light diffuser has an average particle diameter of 5 to 200 µm, preferably 8 to 100 µm. If the average particle diameter is less than 5 µm, then the light diffuser hardly provides a desired haze with a deterioration of the light transmittance; otherwise, if the average particle diameter exceeds 200 µm, then the resin composition has a rough surface.

The methylmethacrylate and styrene contents out of the above ranges may deteriorate the light transmittance and increase the haze.

The content of the bead type light diffusion resin comprising PMMA is, based on 100 parts by weight of the polyester-based resin, 0.1 to 15 parts by weight, preferably 0.5 to 7 parts by weight. If the content of the bead type light diffusion resin is less than 0.1 part by weight, then the resin composition has a low haze, otherwise, if the content of the bead type light diffusion resin exceeds 15 parts by weight, then the resin composition has a reduced light transmittance.

Most of the plastic materials have a surface resistance of about 10¹⁴ to 10¹⁶ Ω at which the electrostatic charge makes dust adhere to the plastic materials. So, the product molded from a material having an antistatic characteristic must have a surface resistance of less than 10¹¹ Ω.

For this purpose, the light diffusion resin composition of the present invention includes an antistatic agent, which is at least one selected from cationic surfactants, anionic surfactants, amphiphilic surfactants or non-ionic surfactants. The content of the antistatic agent is preferably 0.3 to 5 parts by weight based on 100 parts by weight of the polyester-based resin. If the content of the antistatic agent is less than 0.3 part by weight, then the surface resistance is not lowered sufficiently to provide the antistatic characteristic, otherwise, if the content of the antistatic agent exceeds 5 parts by weight, then the resin composition has a problem including surface defects or yellowing.

The specific examples of the antistatic agent may include: cationic surfactants such as saturated or unsaturated tetra-alkyl or tetra-aryl ammonium salts having 2 to 50 carbon atoms; anionic surfactants such as saturated or unsaturated alkyl or aryl sulfonates having 2 to 30 carbon atoms, or saturated or unsaturated alkyl or aryl phosphonate having 2 to 30 carbon atoms; amphiphilic surfactants such as saturated or unsaturated alkyl or aryl betain having 2 to 30 carbon atoms; and non-ionic surfactants such as saturated or unsaturated alkyl or aryl glycerol esters having 2 to 30 carbon atoms.

To enhance the brightness, the light diffusion resin composition of the present invention includes an optical brightener, which is at least one selected from benzotriazole-phenylcoumarins, bis-benzoxazoles, triazine-phenylcoumarines, bis-(styryl)biphenyls, and naphtoriazole-phenylcoumarins. The content of the optical brightener is preferably 0.001 to 0.1 part by weight based on 100 parts by weight of the polyester-based resin. If the content of the fluorescent brightener is less than 0.001 part by weight, then the brightness cannot be enhanced, otherwise, if the content of the fluorescent brightener exceeds 0.1 part by weight, then the light transmittance becomes deteriorated.

On the other hand, the method for preparing a light diffusion resin composition from the above-mentioned polyester-based light diffusion resin composition can be described as follows. First, the composition is uniformly dispersed with a known melting mixer such as a single screw extruder, a twin screw extruder or a banbary mixer. The composition is then cooled down through a water bath and cut into a pellet type polyester-based light diffusion resin. The pellet thus obtained is extruded into a sheet through a sheet extruder and then subjected to calendar rolls.

For the composition of the present invention, the bead type light diffusion resin comprising PMMA, the antistatic agent and the optical brightener alone or in combination can be prepared in the master batch form and then added to the polyester-based resin.

Hereinafter, the present invention will be described in detail by way of the following examples, which are not intended to limit the scope of the present invention.

### Example 1

Based on 100 parts by weight of an amorphous PETG resin, 1.5 part by weight of a bead type light diffusion resin (MPB-X10^{™} supplied by Kolon industries Inc., comprised of 95 mol% of PMMA and 5 mol% of polystyrene) having an average particle diameter of 10 µm, 1.0 part by weight of sodium dodecylsulfonate as an antistatic agent, and 0.005 part by weight of bis-(styryl)biphenyl as an optical brightener were added to the hopper of a twin screw extruder equipped with a vacuum belt by way of a constant feeder, and uniformly dispersed through a melting mixing. The mixed melt was cooled down through a water bath and cut into a pellet type light diffusion resin.

The pellet thus obtained was dried in a dehumidifying drier for at least four hours, extruded into a sheet with a single screw extruder, and passed through calendar rolls into a 1.5mm-thickness sheet.

The sheet thus obtained was then analyzed in regard to haze and light transmittance according to the ASTM D 1003, surface resistance according to the ASTM D 257, and impact strength according to the ASTM D 256. The results are presented in Table 2.

### Example 2

The procedures were performed to prepare a light diffusion resin and a sheet in the same manner as described in Example 1, excepting that an amorphous polyethyleneterephthalate (amorphous PET) resin was used instead of the amorphous PETG resin.

The sheet thus obtained was analyzed in regard to haze and light transmittance according to the ASTM D 1003, surface resistance according to the ASTM D 257, and impact strength according to the ASTM D 256. The results are presented in Table 2.

### Examples 3 to 7

The procedures were performed to prepare a light diffusion resin and a sheet in the same manner as described in Example 1, excepting that the polyester-based resin as presented in Table 1 and a bead type light diffusion resin (MPB-X12^{™} supplied by Kolon industries Inc.) comprised of PMMA as a light diffuser were used.

The sheet thus obtained was analyzed in regard to haze and light transmittance according to the ASTM D 1003, surface resistance according to the ASTM D 257, and impact strength according to the ASTM D 256. The results are presented in Table 2.

**Table 1**

| | Polyester resin | Bead type light diffusion resin comprised of PMMA | | | |
|---|---|---|---|---|---|
| | | Composition (mol%) | | Average particle diameter (µm) | Content (part by weight) |
| | | Methylmethacrylate | Styrene | | |
| Example 3 | PBT | 95 | 5 | 12 | 2.5 |
| Example 4 | PETG | 95 | 5 | 15 | 7.0 |
| Example 5 | PEN | 95 | 5 | 20 | 10.0 |
| Example 6 | PETG | 95 | 5 | 50 | 12.0 |
| Example 7 | PETG | 95 | 5 | 200 | 15.0 |

### Comparative Example 1

The procedures were performed to prepare a light diffusion resin and a sheet in the same manner as described in Example 1, excepting that a PMMA resin was used as a matrix resin instead of the amorphous PETG resin.

The sheet thus obtained was analyzed in regard to haze and light transmittance according to the ASTM D 1003, surface resistance according to the ASTM D 257, and impact strength according to the ASTM D 256. The results are presented in Table 2.

### Comparative Example 2

The procedures were performed to prepare a light diffusion resin and a sheet in the same manner as described in Example 1, excepting that an acryl resin prepared by a casting method was used as a matrix resin instead of the amorphous PETG resin.

The sheet thus obtained was analyzed in regard to haze and light transmittance according to the ASTM D 1003, surface resistance according to the ASTM D 257, and impact strength according to the ASTM D 256. The results are presented in Table 2.

### Comparative Examples 3 and 4

The procedures were performed to prepare a light diffusion resin and a sheet in the same manner as described in Example 1, excepting that 0.3 part by weight of titanium dioxide and 2.5 parts by weight of calcium carbonate were added respectively instead of the bead type light diffusion resin comprised of PMMA.

The sheet thus obtained was analyzed in regard to haze and light transmittance according to the ASTM D 1003, surface resistance according to the ASTM D 257, and impact strength according to the ASTM D 256. The results are presented in Table 2.

### Comparative Example 5

The procedures were performed to prepare a light diffusion resin and a sheet in the same manner as described in Example 2, excepting that 2.5 parts by weight of calcium carbonate were added instead of the bead type light diffusion resin comprised of PMMA.

The sheet thus obtained was analyzed in regard to haze and light transmittance according to the ASTM D 1003, surface resistance according to the ASTM D 257, and impact strength according to the ASTM D 256. The results are presented in Table 2.

**Table 2**

| | Haze (%) | Light Transmittance(%) | Surface resistance (Ω) | Impact strength (kg·cm/cm) |
|---|---|---|---|---|
| Example 1 | 93 | 86 | 8.8 × 10¹⁰ | 8.5 |
| Example 2 | 89 | 84 | 8.8 × 10¹⁰ | 7.5 |
| Example 3 | 88 | 83 | 6.2 × 1010 | 7.2 |
| Example 4 | 91 | 85 | 9.2 × 10⁹ | 6.8 |
| Example 5 | 89 | 84 | 7.7 × 10¹⁰ | 7.8 |
| Example 6 | 90 | 85 | 8.2 × 10¹⁰ | 6.5 |
| Example 7 | 90 | 85 | 9.8 × 10⁹ | 6.9 |
| Comparative Example 1 | 30 | 88 | 1.0 × 10¹¹ | 1.4 |
| Comparative Example 2 | 32 | 88 | 1.5 × 10¹¹ | 1.8 |
| Comparative Example 3 | 85 | 45 | 9.6 × 10¹¹ | 5.6 |
| Comparative Example 4 | 84 | 41 | 7.3 × 10¹¹ | 4.9 |
| Comparative Example 5 | 84 | 38 | 7.3 × 10¹¹ | 4.9 |

As can be seen from the results of Table 2, the sheet prepared from the polyester light diffusion resin composition comprising a polyester-based resin as a matrix resin and a bead type light diffusion resin comprised of PMMA as a light diffuser exhibits high haze and high light transmittance and improves impact strength relative to the sheets of Comparative Examples 1 and 2 using the conventional acrylic polymer as a matrix resin. In particular, the sheets using PETG as the polyester-based resin (in Examples 1, 4, 6 and 7) exhibit more enhanced properties than those using PBT, PEN or PET.

### Industrial Applicability

As described above, the light diffusion resin composition prepared by adding a bead type light diffusion resin comprised of PMMA as a light diffuser to a polyester resin according to the present invention can be molded into a cover for lightings or sign boards by a processing method such as injection molding, extrusion molding or compression molding, so that the cover thus manufactured has a high haze and high light transmittance, making lamps of the lightings or the sign boards, interior lamps of buildings and contents invisible with a high light transmittance and hence a high level of luminance, provides a low surface resistance to prevent dust-attraction caused by static electricity, and minimizes a deterioration of impact strength, thereby allowing the manufacture of the cover irrespective of size.

## Claims

1. A light diffusion resin composition comprising a polyester-based resin, a bead type light diffusion resin comprising polymethylmethacrylate as a light diffuser, an antistatic agent, and an optical brightener.

2. The light diffusion resin composition as claimed in claim 1, wherein the polyester-based resin includes at least one selected from the group consisting of poly(ethyleneterephthalate-co-dimethylcyclohexylterephthalate), polyethyleneterephthalate, polybutyleneterephthalate and polyethylenenaphthalate, or copolymers of these polymers.

3. The light diffusion resin composition as claimed in claim 1, wherein the polyester-based resin is poly(ethyleneterephthalate-co-dimethylcyclohexylterephthalate).

4. The light diffusion resin composition as claimed in claim 2, wherein the polyester-based resin is poly(ethyleneterephthalate-co-dimethylcyclohexylterephthalate).

5. The light diffusion resin composition as claimed in claim 1, wherein the light diffuser comprises 50 to 100 mol% of methylmethacrylate and less than 50 mol% of styrene, the light diffuser having an average particle diameter of 5 to 200 µm.

6. The light diffusion resin composition as claimed in claim 1, wherein the light diffusion resin composition comprises, based on 100 parts by weight of the polyester-based resin, 0.1 to 15 parts by weight of the light diffuser, 0.3 to 5 parts by weight of the antistatic agent, and 0.001 to 0.1 part by weight of the optical brightener.

7. The light diffusion resin composition as claimed in claim 1, wherein the antistatic agent includes at least one selected from cationic surfactants such as saturated or unsaturated tetra-alkyl or tetra-aryl ammonium salts having 2 to 50 carbon atoms; anionic surfactants such as saturated or unsaturated alkyl or aryl sulfonates having 2 to 30 carbon atoms, or saturated or unsaturated alkyl or aryl phosphonate having 2 to 30 carbon atoms; amphiphilic surfactants such as saturated or unsaturated alkyl or aryl betain having 2 to 30 carbon atoms; and non-ionic surfactants such as saturated or unsaturated alkyl or aryl glycerol esters having 2 to 30 carbon atoms.

8. The light diffusion resin composition as claimed in claim 1, wherein the optical brightener includes at least one selected from benzotriazole-phenylcoumarins, bis-benzoxazoles, triazine-phenylcoumarines, bis-(styryl)biphenyls, and naphtoriazole-phenylcoumarins.

## Patentansprüche

1. Lichtdiffundierende Harzzusammensetzung, umfassend ein Harz auf Polyesterbasis, ein lichtdiffundierendes Harz vom Kügelchentyp, umfassend Polymethylmethacrylat als einen Lichdiffusor, ein antistatisches Mittel und einen optischen Aufheller.

2. Lichtdiffundierende Harzzusammensetzung nach Anspruch 1, wobei das Harz auf Polyesterbasis mindestens eines beinhaltet, gewählt aus der Gruppe, bestehend aus Poly(ethylenterephthalat-co-dimethylcyclohexylterephthalat), Polyethylenterephthalat, Polybuylenterephthalat und Polyethylennaphthalat oder Copolymeren aus diesen Polymeren.

3. Lichtdiffundierende Harzzusammensetzung nach Anspruch 1, wobei das Harz auf Polyesterbasis Poly(ethylenterephthalat-co-dimethylcyclohexylterephthalat) ist.

4. Lichtdiffundierende Harzzusammensetzung nach Anspruch 2, wobei das Harz auf Polyesterbasis Poly(ethylenterephthalat-co-dimethylcyclohexylterephthalat) ist.

5. Lichtdiffundierende Harzzusammensetzung nach Anspruch 1, wobei der Lichtdiffusor 50 bis 100 Mol% Methylmethacrylat und weniger als 50 Mol% Styrol umfasst, wobei der Lichtdiffusor einen durchschnittlichen Teilchendurchmesser von 5 bis 200 µm besitzt.

6. Lichtdiffundierende Harzzusammensetzung nach Anspruch 1, wobei die lichtdiffundierende Harzzusammensetzung, bezogen auf 100 Gewichtsteile des Harzes auf Polyesterbasis, 0,1 bis 15 Gewichtsteile des Lichtdiffusors, 0,3 bis 5 Gewichtsteile des antistatischen Mittels und 0,001 bis 0,1 Gewichtsteile des optischen Aufhellers umfasst.

7. Lichtdiffundierende Harzzusammensetzung nach Anspruch 1, wobei das antistatische Mittel mindestens eines beinhaltet, gewählt aus kationischen Tensiden, wie gesättigten oder ungesättigten Tetraalkyl- oder Tetraarylammoniumsalzen mit 2 bis 50 Kohlenstoffatomen; anionischen Tensiden, wie gesättigten oder ungesättigten Alkyl- oder Arylsulfonaten mit 2 bis 30 Kohlenstoffatomen oder gesättigten oder ungesättigten Alkyl- oder Arylphosphonaten mit 2 bis 30 Kohlenstoffatomen; amphiphilen Tensiden, wie gesättigtem oder ungesättigtem Alkyl- oder Arylbetain mit 2 bis 30 Kohlenstoffatomen; und nichtionischen Tensiden, wie gesättigten oder ungesättigten Alkyl- oder Arylglycerinestern mit 2 bis 30 Kohlenstoffatomen.

8. Lichtdiffundierende Harzzusammensetzung nach Anspruch 1, wobei der optische Aufheller mindestens einen beinhaltet, gewählt aus Benzotriazol-Phenylcumarinen, Bis-benzoxazolen, Triazin-Phenylcumarinen, Bis-(styryl)biphenylen und Naphtoriazol-Phenylcumarinen.

## Revendications

1. Composition de résine à diffusion de la lumière comprenant une résine à base de polyester, une résine à diffusion de lumière du type perle comprenant du polyméthacrylate en tant que diffuseur de lumière, un agent antistatique et un brillanteur optique.

2. Composition de résine à diffusion de la lumière selon la revendication 1, dans laquelle la résine à base de polyester comprend au moins un composé choisi dans le groupe constitué par le poly(éthylènetéréphthalate-co-diméthylcyclohexyltéréphthalate), le polyéthylènetéréphthalate, le polybutylènetéréphthalate et le polyéthylènenaphthalate, ou des copolymères de ces polymères.

3. Composition de résine à diffusion de la lumière selon la revendication 1, dans laquelle la résine à base de polyester est le poly(éthylènetéréphthalate-co-diméthylcyclohexyltéréphthalate).

4. Composition de résine à diffusion de la lumière selon la revendication 1, dans laquelle la résine à base de polyester est le poly(éthylènetéréphthalate-co-diméthylcyclohexyltéréphthalate).

5. Composition de résine à diffusion de la lumière selon la revendication 1, dans laquelle le diffuseur de lumière comprend de 50 à 100% en moles de méthylméthacrylate et moins de 50% en moles de styrène, le diffuseur de lumière ayant un diamètre moyen de particule compris entre 5 et 200 µm.

6. Composition de résine à diffusion de la lumière selon la revendication 1, dans laquelle la composition de résine à diffusion de lumière comprend, sur la base de 100 parties en poids de résine à base de polyester, 0,1 à 15 parties en poids du diffuseur de lumière, 0,3 à 5 parties en poids de l'agent antistatique et 0,001 à 0,1 parties en poids du brillanteur optique.

7. Composition de résine à diffusion de la lumière selon la revendication 1, dans laquelle l'agent antistatique comprend au moins un surfactant choisi parmi les surfactants cationiques tels que des sels d'ammonium saturés ou non saturés de tétra-alkyl ou tétra-aryl ammonium ayant de 2 à 50 atomes de carbone ; des surfactants anioniques tels que des alkyl ou aryl sulfonates saturés ou non saturés ayant de 2 à 30 atomes de carbone, ou un alkyl ou aryl phosphonate saturé ou non saturé ayant de 2 à 30 atomes de carbone ; des surfactants amphiphiliques tels qu'un alkyl ou aryl bétaine saturée ou non saturée ayant de 2 à 30 atomes de carbone ; et des surfactants non ioniques tels que des alkyl ou aryl esters de glycérol saturés ou non saturés ayant de 2 à 30 atomes de carbone.

8. Composition de résine à diffusion de la lumière selon la revendication 1, dans laquelle le brillanteur optique comprend au moins un composé choisi parmi les benzotriazole-phénylcoumarines, les bis-benzoxazoles, les triazine-phénylcoumarines, les bis-(styryl)biphényls, et les naphtoriazole-phénylcoumarines.
